# EUROPEAN PATENT APPLICATION

(11) **EP 1 437 889 A1**
(43) Date of publication of application: **14.07.2004**
(21) Application number: 03290023.5
(22) Date of filing: 06.01.2003
(51) Int. Cl.: H04N 5/782

(54) **Method for inserting data into a timer for a video recording device**

(71) Applicant: Thomson Licensing S.A., 92648 Boulogne Cedex (FR)
(72) Inventor: Barron, Steve, Singapore 738243 (SG); Tang, Swee Swee, Singapore 640447 (SG)
(74) Representative: Rittner, Karsten, Dr.

(57) **Abstract**

A method for inserting additional data into a recurring timer (21) of a video recording device extracts (3) additional data received together with the video signal, e.g. in line 21 of the vertical blanking interval, detects if said extracted data contain specific information to be displayed in a list of timers, extracts (6) said specified information and inserts it to the list of recurring timers (31). Advantageously, by using this method it is possible to automatically add program titles to a list of recurring timers without accessing an electronic program guide.

## Description

### Field of the invention

This invention relates to a method for inserting additional data, e.g. program title, into a timer for a video recording device.

### Background

When a number of timers are set up in a video recording device, e.g. Personal Video Recorder (PVR), it is convenient for the user if the list of timers contains additional information, e.g. the titles of the programs to be recorded. This information may be entered interactively, e.g. by using an on-screen keyboard, or may be obtained e.g. from an Electronic Program Guide (EPG) which is an additional service of most video content providers. However, some video content providers do not offer said service, or offer it for additional costs so that some customers decide not to acquire the service. In these cases channel, date and time, or maybe a kind of code number, must be entered when setting up the timer of a video recorder. Therefore, when the pre-programmed timers are listed on the screen, the titles and other additional data are not displayed, only channel, date and time. When the list is long, e.g. comprising a number of episodes of various series or other recurring programs, it is difficult to overview.

Further, in almost all publicly used video standards there is a possibility to transmit additional information in the vertical blanking interval (VBI), like teletext in Europe or Closed Captioning in the U.S. Various devices exist for extracting and decoding such information. In some cases also the title of the currently transmitted program is included in this information, e.g. for the NTSC standard it may be transmitted in line 21 according to the EIA/CEA-608-B standard.

### Summary of the invention

The problem to be solved by the invention is that program information, e.g. the program title or program type, is missing for recurring timers if a video recording device has no access to an EPG. This problem is solved by the method disclosed in claim 1. An apparatus using this method is disclosed in claim 7.

According to the invention, additional information data regarding a program is extracted from the VBI, while a program being part of a series is recorded, and this data is added to the timer information for all future parts of this series, so that the data may be displayed when the pre-programmed timers are listed. Whether or not a pre-programmed timer is part of a series of timers, can be detected e.g. by the way it was programmed, namely as a recurring timer.

Advantageous embodiments of the invention are disclosed in the dependent claims, the figures and the following detailed description.

### Brief description of the drawings

Exemplary embodiments of the invention are described with reference to the accompanying drawings, which show in
Fig.1 an exemplary system for extracting additional data from the VBI;
Fig.2 an on-screen display for detailed timer information;
Fig.3 a list of timers without program names; and
Fig.4 a list of timers with program names added.

### Detailed description of the invention

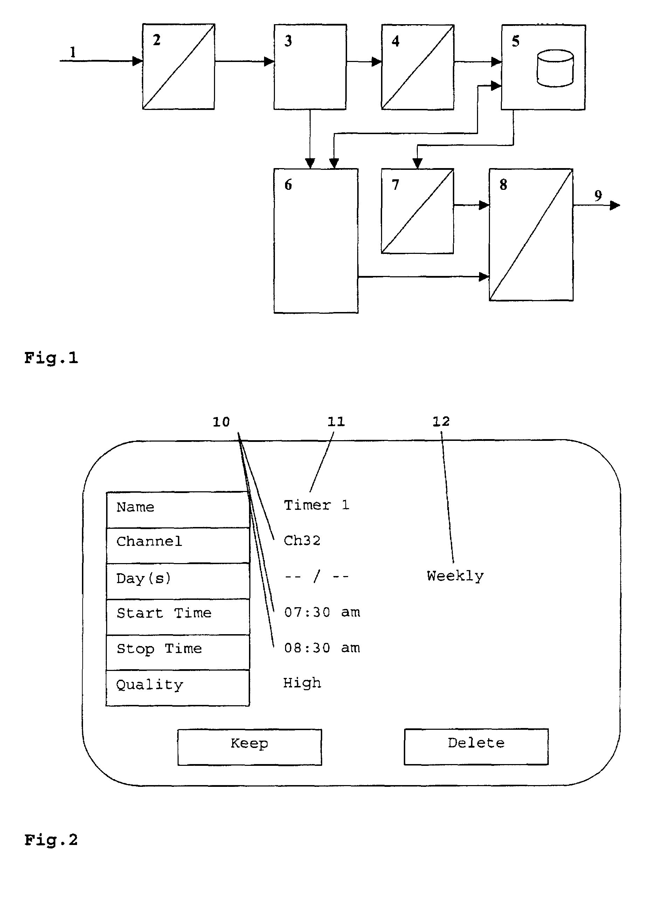

According to the invention, additional program information, e.g. the program title, is extracted from the information received in the VBI, and inserted into the list of timers if a program is being recorded due to a recurring timer. An exemplary block diagram of a digital system using the inventive method is depicted in Fig. 1. An NTSC input signal 1 is received and decoded in a decoder 2 into a CCIR656 digital video stream. Then the additional information from line 21 is separated from said digital video stream, and decoded in a slicer 3. The resulting audio and video (AV) stream is sent to an MPEG (Motion Picture Expert Group) encoder 4, and the MPEG encoded signal is stored on a digital storage medium 5, e.g. hard disk drive, while the additional information decoded by the slicer 3 is processed by a processing unit 6. The processing unit 6 detects e.g. the program title and sends it to the storage medium 5, which stores the information in a file associated with the recorded AV stream. For reproduction of said AV stream the recorded data are read from the storage medium 5 and then transferred to an MPEG decoder 7. The decoded AV stream is transferred to a display control unit 8 that converts the AV stream and the data read from the file associated with said AV stream into display data. The information about how to convert the data from said file to pixels of the display is received from a graphics generator, which may be implemented as part of the processing unit 6. Further, the display control unit 8 encodes the display data and provides an NTSC formatted signal 9 for output on a TV.

When details of a recurring timer are displayed, the screen presented to the user may look like shown in Fig.2. It displays an identifier 11 for the current timer and the information entered by the user, namely channel and time 10 of the program to be recorded, and the information that this is a recurring timer 12, e.g. daily or weekly. The identifier 11 may be used as default title string in a list of timers.

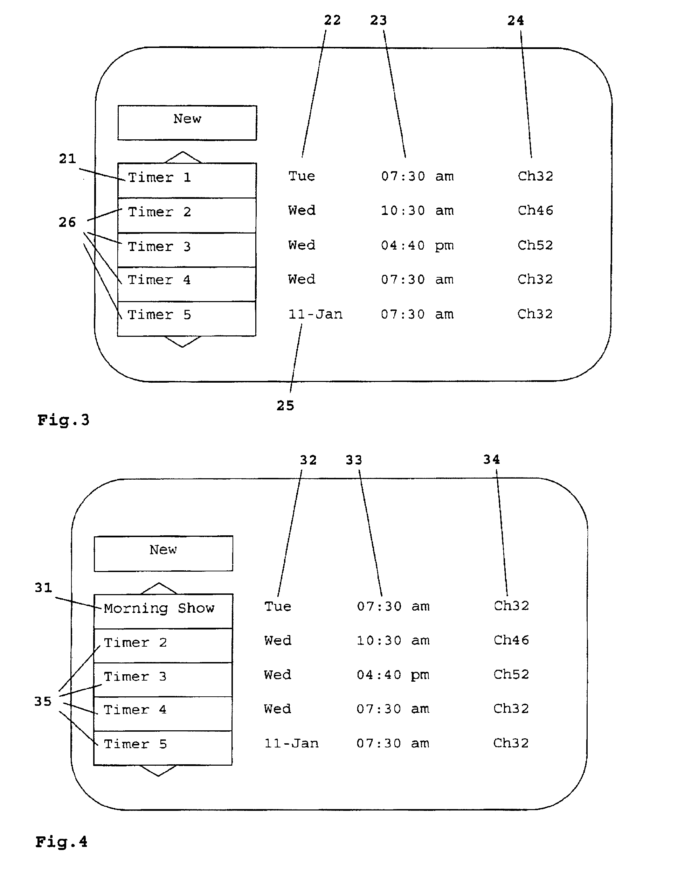

Fig.3 shows a screen displaying the list of timers, after programming a recurring timer 21, but before recording for the first time a program relating to said recurring timer. The display contains a default title string 21, the day 22, time 23 and channel 24 of the next timer instance, and various other timers 26 with their respective data. In this example recurring timers are denoted by a day display 22, while non-recurring timers are denoted by a day-month display 25.

According to the invention, the list of timers may be modified as shown in Fig.4 when for the first time a program relating to the recurring timer 21 is recorded. The list may still display day 32, time 33 and channel 34 of the recurring timer 31, and other timers 35, but the default title string for the recurring timer 31 is replaced with the actual program title extracted from the VBI.

In one embodiment of the invention the described insertion of extracted additional data is performed only if said additional data are not already stored for a recurring timer, e.g. when the recurring timer records for the first time. In another embodiment of the invention the extracted additional data are inserted whenever a program is recorded due to a recurring timer, possibly overwriting previously inserted information. In a third embodiment of the invention the stored data of the recurring timer may be compared to the additional data that are being received with the currently recorded program, and modified only if they have changed.

Alternatively to using a single line for a recurring timer when displaying a list of timers, it is possible to list several or all instances of a recurring timer. In this case the additional data may be extracted as described before, and displayed with every displayed instance of the recurring timer.

Advantageously, the described method for adding information to a recurring timer may be used in video or AV recording devices, but also in other recording devices that can be programmed using recurring timers and that receive additional information while recording. The additional information may be e.g. program title, program type like sports or children program or program classification, like not being appropriate for children.

## Claims

1. Method for adding information to a timer for a video recording device, wherein said timer specifies details necessary to record a video program, **characterized in**
- recording a video program due to a recurring timer (12);
- extracting (3) additional information from the video signal, the additional information being received simultaneously with the video program;
- detecting (6) if said additional information contains a specified information regarding said video program;
- extracting (6) said specified information from said additional information;
- associating said specified information with current or future instances of the recurring timer; and
- displaying a list of timers with said associated information.

2. Method according to claim 1, wherein said specified information is the program title of the video program being recorded.

3. Method according to claim 1 or 2, wherein the specified information is only inserted to those instances of said recurring timer that do not have said specified information already inserted.

4. Method according to claim 1 or 2, wherein the specified information is inserted to all instances of said recurring timer.

5. Method according to any of claims 1-4, wherein said additional information is extracted from a vertical blanking interval of an analogue video signal.

6. Method according to claim 5, wherein said specified information is extracted from line 21 of the vertical blanking interval of an NTSC signal.

7. Apparatus for setting up a timer in a video recording device **characterized by**
- means for recording a video program due to a recurring timer (12);
- means (3) for extracting additional information from the video signal, said additional information being received simultaneously with the video program;
- means (6) for detecting if said additional information contains a specified information regarding said video program, the specified information being displayable in a list of timers;
- means (6) for extracting said specified information from said additional information; and
- means for inserting said specified information to current or future instances of the recurring timer.

8. Apparatus according to claim 7, further specified by extracting said additional information from a vertical blanking interval of an analogue video signal.

9. Apparatus according to any of claims 7-8, further specified by extracting said specified information from line 21 of the vertical blanking interval of an NTSC signal.
